# EUROPEAN PATENT APPLICATION

(11) **EP 2 500 804 A2**
(43) Date of publication of application: **19.09.2012**
(21) Application number: 12158693.7
(22) Date of filing: 09.03.2012
(51) Int. Cl.: G06F 3/044

(54) **Touch screen panel apparatus with improved electrode structure**

(30) Priority: 17.03.2011 KR 20110024081
(71) Applicant: Samsung Electronics Co., Ltd., Suwon-si, Gyeonggi-do 442-742 (KR)
(72) Inventor: Lee, Yu-Sheop, 442-742 Gyeonggi-do (KR); Park, Sung-Soo, 442-742 Gyeonggi-do (KR); Park, Myeong-Sil, 442-742 Gyeonggi-do (KR)
(74) Representative: Grünecker, Kinkeldey, Stockmair & Schwanhäusser

(57) **Abstract**

A touch screen panel apparatus is provided. The touch screen panel apparatus includes a first electrode layer including: a plurality of first electrode lines arranged in a first direction to be spaced apart from each other by a predetermined distance; a plurality of first odd-numbered electrode plates coupled to odd-numbered lines of the first electrode lines; and a plurality of first even-numbered electrode plates coupled to even-numbered lines of the first electrode lines. The plurality of first odd-numbered electrode plates and the plurality of first even-numbered electrode plates are alternately arranged in a second direction different from the first direction.

## Description

### BACKGROUND OF THE INVENTION

### 1. Field of the Invention

The present invention relates generally to a touch screen panel apparatus, and more particularly to a structure of a capacitive touch screen panel apparatus.

### 2. Description of the Related Art

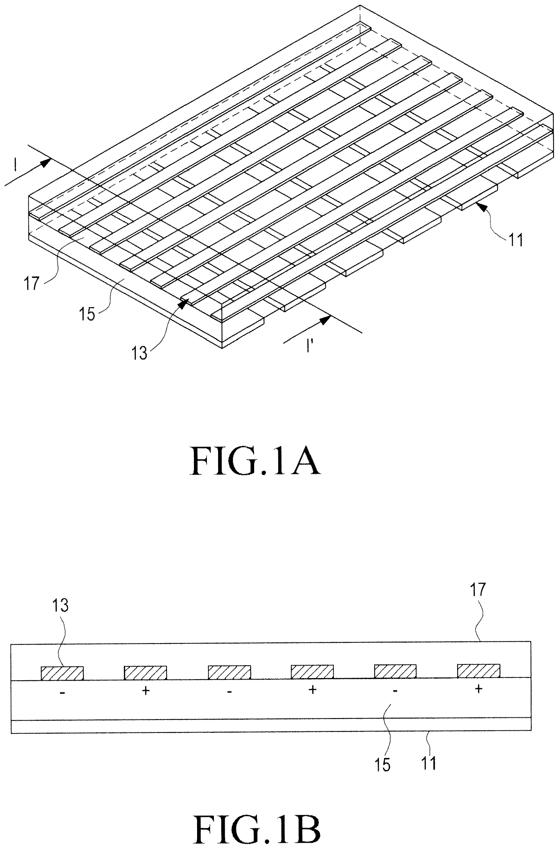

FIG. 1A is a perspective view of a conventional mutual touch screen panel, and FIG. 1B is a side sectional view taken along line I-I' of FIG. 1A.

Referring to FIGS. 1A and 1B, the conventional touch screen panel includes a first electrode layer 11 formed at a lower portion thereof, and a second electrode layer 13 formed above the first electrode layer 11 to be spaced apart from the first electrode layer 11 by a predetermined distance, the second electrode layer 13 being separated from the first electrode layer 11 by a substrate 15 having a certain dielectric coefficient. The first electrode layer 11 and the second electrode layer 13 include a plurality of respective electrode lines, such that the electrode lines of the first electrode layer 11 are arranged to cross the electrode lines of the second electrode layer 13. A reinforced glass member 17 for protecting the second electrode layer 13 is further provided at an upper portion of the touch screen panel.

A first circuit (not shown) for applying a signal is connected to the first electrode layer 11. If a signal is applied from the first circuit to the first electrode layer 11, electric fields are created by the signal between the first electrode layer 11 and the second electrode layer 13 and the signal applied to the first electrode layer 11 by the electric fields is transmitted to the second electrode layer 13. The signal transmitted to the second electrode layer 13 is provided to a second circuit. The second circuit checks a change in the signal transmitted from the second electrode layer 13, checks a touch input, and checks a coordinate value of a region where a touch input is made.

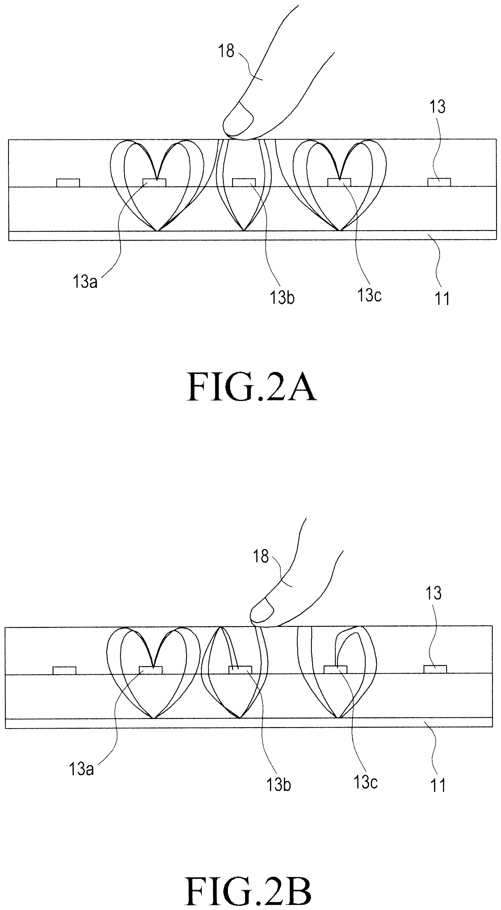

FIGS. 2A and 2B are side sectional views of the conventional mutual touch screen panel of FIG. 1A, illustrating a state where a finger of a user contacts the mutual touch screen panel.

Referring to FIGs. 2A and 2B, if touch input by a user's finger 18 is not provided, a signal of the first electrode layer 11 is coupled to be transmitted to the second electrode layer 13 through the electric fields created between the first electrode layer 11 and the second electrode layer 13 and the signal transmitted from the second electrode layer 13 takes the form of a reference level in the second circuit.

However, as illustrated in FIG. 2A, if a touch input by a user's finger 18 is provided, some of the electric fields created between the first electrode layer 11 and the second electrode layer 13 are influenced by the user's finger 18. Thus, a degree by which the signal of the first electrode layer 11 is coupled to the second electrode layer 13 is reduced, and an electric strength (i.e. voltage value) of the signal transmitted from the second electrode layer 13 becomes lower than a reference level. Due to the material characteristics of a surface of the finger 18 of the user, the finger 18 of the user forms a predetermined contact area with the touch screen panel and the interval among a plurality of electrode lines 13a, 13b, and 13c of the second electrode layer 13 is smaller than the contact area. Thus, when the finger 18 provides a touch input, the finger 18 influences the electric fields created in at least two electrode lines. For example, even if the finger 18 touches a region where the second electrode line 13b is located, as shown in FIG. 2A, the finger 18 also influences the electric fields created by the first electrode line 13a and the third electrode line 13c adjacent to the second electrode line 13b. The second circuit connected to the second electrode layer 13 determines a touch region through an interpolation based on the strengths of the outputs of the channels corresponding to the first electrode line 13a, the second electrode line 13b, and the third electrode line 13c. Likewise, if the finger 18 of the user touches a region between the second electrode line 13b and the third electrode line 13c as shown in FIG. 2B, it influences the electric fields created by the second electrode line 13b and the third electrode line 13c, and the second circuit connected to the second electrode layer 13 determines a touch region through an interpolation based on the strengths of the outputs of the channels corresponding to the second electrode line 13b and the third electrode line 13c.

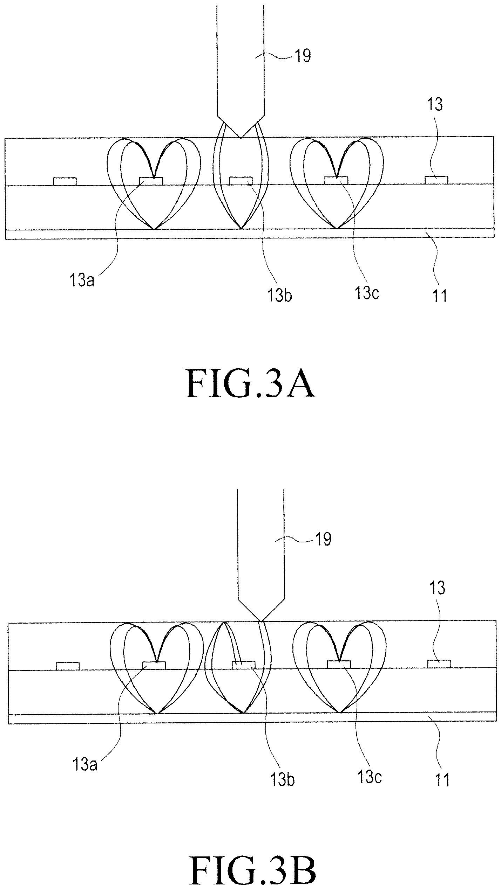

FIGS. 3A and 3B are side sectional views of the conventional mutual touch screen panel of FIG. 1A, illustrating a state where a stylus pen contacts the conventional mutual touch screen panel.

Referring to FIGs. 3A and 3B, an end of a stylus pen used for a touch input is smaller than an end of a finger of a user to form a small contact area, and a diameter of the contact area of the stylus pen 19 may be smaller than the interval among the plurality of electrode lines 13a, 13b, and 13c of the second electrode layer 13. Considering this, if a stylus pen 19 provides a touch input, and in particular if the stylus pen 19 touches a region where the second electrode line 13b is located, the stylus pen 19 only influences the electric fields created by the second electrode line 13b and does not influence the electric fields created by the adjacent first and third electrode lines 13a and 13c as shown in FIG. 3a. Even if a region touched by the stylus pen 19 is moved to a region between the second electrode line 13b and the third electrode line 13c, a diameter of a contact area of the stylus pen 19 is smaller than the interval among the plurality of electrode lines 13a, 13b, and 13c of the second electrode layer 13, to only influence the electric fields created by the second electrode line 13b and not influence the electric fields created by the third electrode line 13c. Thus, even if a region touched by the stylus pen 19 is moved to a region between the second electrode line 13b and the third electrode line 13c, the touch screen panel cannot detect a change of the regions touched by the stylus pen 19.

As a result, if an input medium (e.g. a stylus pen 19) having a contact area smaller than the interval among the plurality of electrode lines 13a, 13b, and 13c of the second electrode layer 13 contacts the conventional mutual touch screen panel, the touch screen panel cannot accurately detect a coordinate value of the contact region and cannot detect a change of the regions touched by the input medium (having a contact area smaller than the interval between the plurality of electrode lines)

### SUMMARY OF THE INVENTION

Accordingly, an object of the present invention is to address the above-described problems.

In accordance with an aspect of the present invention, a touch screen panel apparatus is provided. The touch screen apparatus includes a first electrode layer that includes a plurality of first electrode lines arranged in a first direction such that adjacent first electrode lines are separated from each other by a predetermined distance; a plurality of first odd-numbered electrode plates coupled to odd-numbered lines of the first electrode lines; and a plurality of first even-numbered electrode plates coupled to even-numbered lines of the first electrode lines, wherein the plurality of first odd-numbered electrode plates and the plurality of first even-numbered electrode plates are alternately arranged in a second direction different from the first direction.

In accordance with another aspect of the present invention, a touch screen panel apparatus is provided. The touch screen panel apparatus includes a plurality of first electrode layers arranged in a first direction such that adjacent first electrode line are separated from each other by a first distance; and a second electrode layer including a plurality of second electrode lines alternately arranged in a second direction different from the first direction, such that adjacent second electrode lines are separated by a second distance, a plurality of second electrode plates arranged such that adjacent second electrode plates are separated by a third distance along one side of respective second electrode lines, and a plurality of third electrode plates arranged such that adjacent third electrode plates are separated by the third distance, along a side of respective second electrode lines opposite the side to which the second electrode plates are arranged, the plurality of second electrode plates and the plurality of third electrode plates being alternately arranged in the first direction.

### BRIEF DESCRIPTION OF THE DRAWINGS

The above and other aspects, features and advantages of the present invention will be more apparent from the following detailed description taken in conjunction with the accompanying drawings, in which:
FIG. 1A is a perspective view illustrating a conventional mutual touch screen panel;
FIG. 1B is a side sectional view illustrating the conventional mutual touch screen panel of FIG. 1A, taken along line I-I' of FIG. 1A;
FIGS. 2A and 2B are side sectional views of the conventional mutual touch screen panel of FIG. 1A, illustrating a state where a finger of a user contacts the conventional mutual touch screen panel;
FIG. 3A and 3B are side sectional views of the conventional mutual touch screen panel of FIG. 1A, illustrating a state where a stylus pen contacts the conventional mutual touch screen panel;
FIG. 4 is a view illustrating a touch screen panel apparatus according to a first embodiment of the present invention;
FIGS. 5A and 5B are graphs representing the result of Experiment 1 where touch inputs were experimented by the touch screen panel apparatus according to the first embodiment of the present invention;
FIG. 6 is a view illustrating a touch screen panel apparatus according to a second embodiment of the present invention;
FIGS. 7A and 7B are graphs representing the result of Experiment 2 where touch inputs were experimented by the touch screen panel apparatus according to the second embodiment of the present invention;
FIG. 8 is a view illustrating a touch screen panel apparatus according to a third embodiment of the present invention;
FIGS. 9A and 9B are graphs representing the result of Experiment 3 where touch inputs were experimented by the touch screen panel apparatus according to the third embodiment of the present invention;
FIG. 10 is a view illustrating a touch screen panel apparatus according to a fourth embodiment of the present invention;
FIGS. 11A and 11B are graphs representing the result of Experiment 4 where touch inputs were experimented by the touch screen panel apparatus according to the fourth embodiment of the present invention; and
FIG. 12 is a view illustrating a touch screen panel apparatus according to a fifth embodiment of the present invention.

### DETAILED DESCRIPTION OF EMBODIMENTS OF THE PRESENT INVENTION

Hereinafter, embodiments of the present invention are described with reference to the accompanying drawings. Although detailed descriptions of various embodiments are presented in the following description, it is apparent that the described features are presented to help provide a general understanding of the present invention, various modifications or changes may be performed within the scope of the present invention.

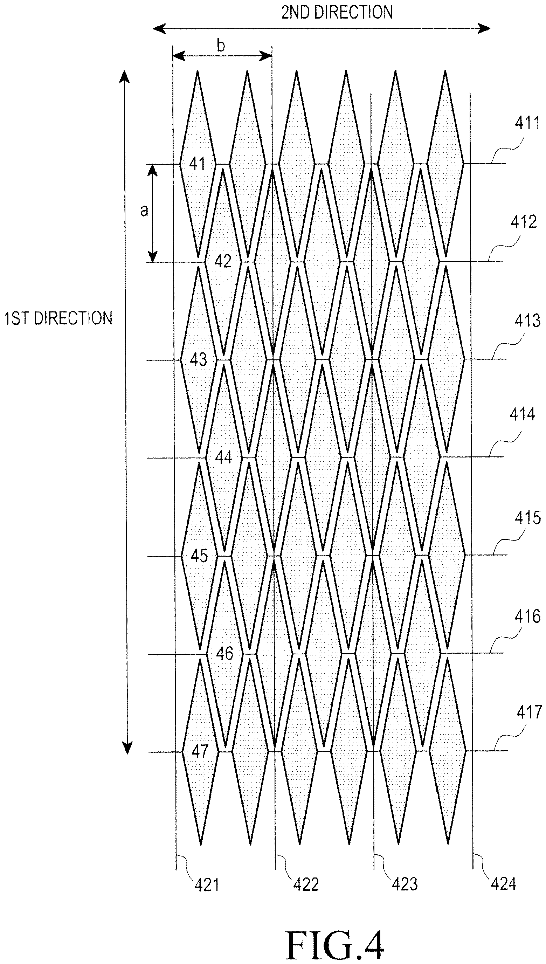

FIG. 4 is a diagram illustrating a touch screen panel apparatus according to a first embodiment of the present invention.

Referring to FIG. 4, the touch screen panel apparatus according to the first embodiment of the present invention includes first electrode lines 411, 412, 413, 414, 415, 416, and 417, first electrode plates 41, 42, 43, 44, 45, 46, and 47 formed in a first electrode layer, and second electrode lines 421, 422, 423, and 424 formed in a second electrode layer.

The first electrode lines 411, 412, 413, 414, 415, 416, and 417 are arranged in a first direction, (e.g. in a longitudinal direction) and are regularly spaced apart from each other by a predetermined distance 'a'. The first electrode plates 41, 42, 43, 44, 45, 46, and 47 include first odd-numbered electrode plates 41, 43, 45, and 47 connected to the odd-numbered rows 411, 413, 415, and 417, respectively, of the first electrode line, and first even-numbered electrode plates 42, 44, and 46 connected to the even-numbered rows 412, 414, and 416, respectively, of the first electrode line.

The first odd-numbered electrode plates 41, 43, 45, and 47 are regularly spaced apart from each other in the odd-numbered rows 411, 413, 415, and 417 of the first electrode line in a second direction, e.g. a transverse direction by a predetermined distance. Moreover, the first odd-numbered electrode plates 41, 43, 45, and 47 and the first even-numbered electrode plates 42, 44, and 46 are alternately arranged in the second direction. That is, the first odd-numbered electrode plates 41, 43, 45, and 47 are arranged in the first column in the second direction, and the first even-numbered electrode plates 42, 44, and 46 are arranged in the second column in the second direction. Likewise, all the first odd-numbered electrode plates connected to the odd-numbered rows 411, 413, 415, and 417 of the first electrode line and all the first even-numbered electrode plates connected to the even-numbered rows 412, 414, and 416 of the first electrode line are regularly arranged.

The area of each of the first electrode plates 41, 42, 43, 44, 45, 46, and 47 decreases from the center of the first electrode plate to the periphery of the first electrode plate. For example, each of the first electrode plates 41, 42, 43, 44, 45, 46, and 47 may have a diamond shape. Since the strengths of the electric fields emitting from an electrode plate become lower as an area of the electrode plate grows smaller, a voltage measured the second electrode layer becomes lower as the location of the voltage measurement further away from the center of the electrode plate. For example, if the distance between each the first electrode lines 411, 412, 413, 414, 415, 416, and 417 are less than a diameter of a contact end of a capacitive touch input pen (i.e. an end portion of a pen contacting the touch screen panel), the contact end of the touch input pen contacts at least two of the first electrode plates 41, 42, 43, 44, 45, 46, and 47, making it possible to detect an output change according to movement of the touch input pen. Since the first electrode plates 41, 42,43, 44, 45, 46, and 47 are continuously arranged in the first direction, even when the touch input pen contacts a region where only one electrode plate is located, outputs are generated not only in the channel corresponding to the electrode plate but also in the channels corresponding to the adjacent neighboring electrode plates. For example, if the touch input pen contacts a region where the first electrode plate 42 in the second row and the second column is located, outputs are generated even in the channels corresponding to the first electrode plate 41 in the first row and the first column and the first electrode plate 43 in the third row and the first column which are adjacent to the contacting electrode plate 42. Thus, since outputs are generated in several channels according to the structure and arrangement of the first electrode plates 41, 42, 43, 44, 45, 46, and 47, a coordinate value of a region touched by a user can be accurately detected.

Although the first electrode plates 41, 42, 43, 44, 45, 46, and 47 are illustrated as having a diamond shape in the first embodiment of the present invention, the present invention is not limited thereto. According to embodiments of the present invention, it is sufficient to have first electrode plates of other shapes such that a central portion of each of the first electrode plates 41, 42, 43, 44, 45, 46, and 47 has an area larger than that of a periphery thereof.

The second electrode lines 421, 422, 423, and 424 are arranged in a second direction, e.g. a transverse direction and are regularly spaced apart from each other by a predetermined distance 'b'.

Preferably, the distance 'a' between each of the first electrode lines 411, 412, 413, 414, 415, 416, and 417 may be the same or similar to the distance 'b' between the second electrode lines 421, 422, 423, and 424. For example, the first column 421 of the second electrode line can be located in left side of the first odd-numbered electrode plates 41, 43, 45, and 47, and the second column 422 of the second electrode line can be located between second electrode plates and third plates of the first even-numbered electrode plates 41, 43, 45, and 47 in the second direction. The third column 423 of the second electrode line can be located between forth electrode plates and fifth plates of the first even-numbered electrode plates in the second direction, and the forth column 424 of the second electrode line can be located in right side of the sixth odd-numbered electrode plates 41, 43, 45, and 47 in the same way.

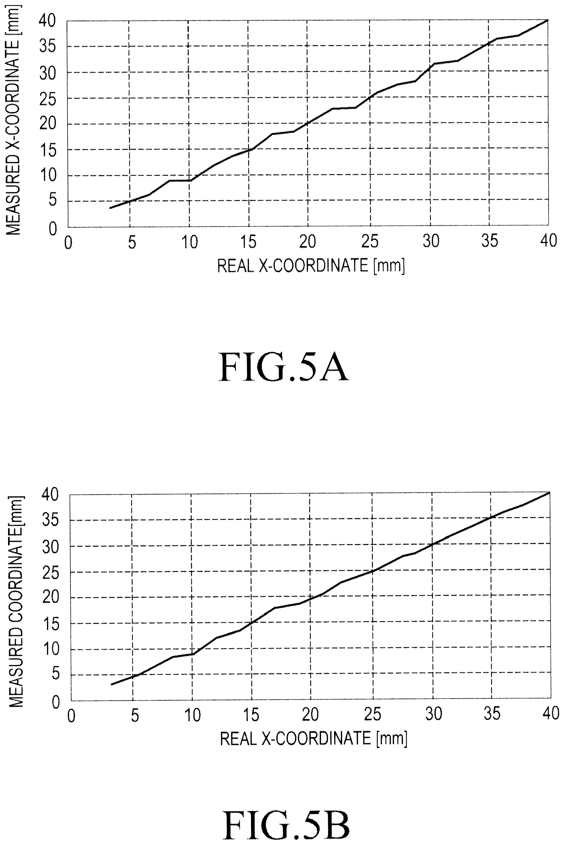

FIG. 5A and 5B are graphs illustrating a result of an Experiment 1 where touch inputs were provided to the touch screen panel apparatus according to the first embodiment of the present invention. FIG. 5A is a graph using measurements obtained by diagonally touching a conventional touch screen panel apparatus are displayed. FIG. 5B is a graph using measurements obtained by diagonally touching the touch screen panel apparatus according to the first embodiment of the present invention. In the graphs of FIGs. 5A and 5B, the X-axis represents X-coordinate values calculated by touch inputs and the Y-axis represents Y-coordinate values calculated by touch inputs. The example of FIG. 5A represents a stepped form due to its low linearity, and the Experiment 1 depicted FIG. 5B represents a relatively high linearity by comparison.

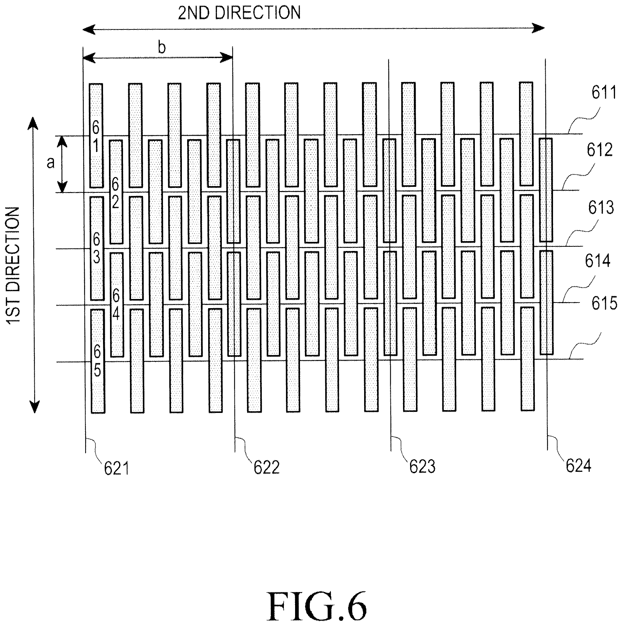

FIG. 6 is a diagram illustrating a touch screen panel apparatus according to a second embodiment of the present invention.

Referring to FIG. 6, the touch screen panel apparatus according to the second embodiment of the present invention includes first electrode lines 611, 612, 613, 614, and 615 and first electrode plates 61, 62, 63, 64, and 65 formed in a first electrode layer, and second electrode lines 621, 622, 623, and 624 formed in a second electrode layer.

The touch screen panel apparatus according to the second embodiment of the present invention is similar the touch screen panel apparatus according to the first embodiment of the present invention. However, a structure of the first electrode plates 61, 62, 63, 64, and 65 coupled to the first electrode lines 611, 612, 613, 614, and 615 differs from the structure of the first electrode plates 41, 42, 43,44, 45, 46, and 47 provided in the touch screen panel apparatus according to the first embodiment of the present invention.

Each of the first electrode plates 61, 62, 63, 64, and 65 of the touch screen panel apparatus according to the second embodiment of the present invention may have a rectangular shape. The length of each of the first electrode plates 61, 62, 63, 64, and 65 in a first direction is preferably longer than the distance 'a' between each of the plurality of first electrode lines 611, 612, 613, 614, and 615. Also, the length of each of the first electrode plates 61, 62, 63, 64, and 65 in a first direction is preferably less than twice the distance 'a' between each of the plurality of first electrode lines 611, 612, 613, 614, and 615.

Moreover, the first electrode plates 61, 62, 63, 64, and 65 may have a rectangular shape in which the length thereof in the first direction is greater than the length thereof in the second direction perpendicular to the first direction.

The first electrode plates 61, 62, 63, 64, and 65 may include first odd-numbered electrode plates 61, 63, and 65 connected to the odd-numbered rows 611, 613, and 615 of the first electrode line and first even-numbered electrode plates 62 and 64 coupled to the even-numbered rows 612 and 614 of the first electrode line. Preferably, the first odd-numbered electrode plates 61, 63, and 65 and the first even-numbered electrode plates 62 and 64 are alternately arranged continuously in a sensing direction, e.g. the first direction.

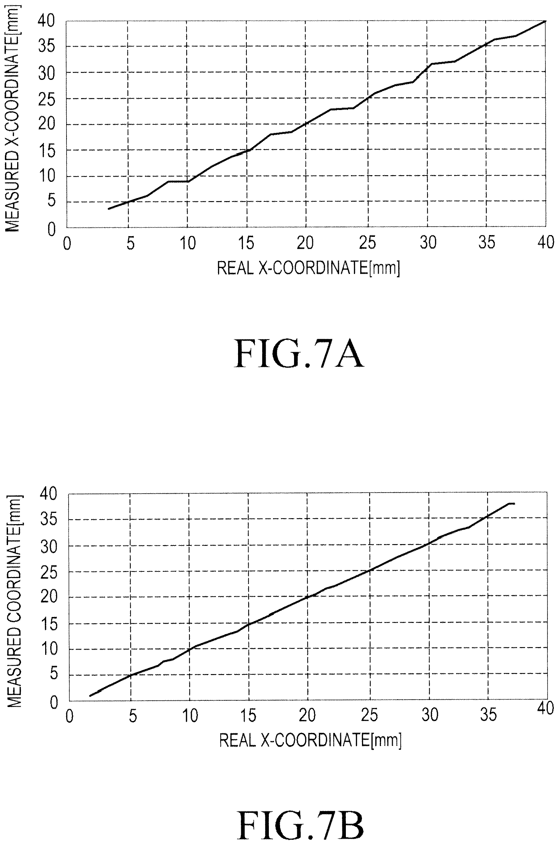

FIGs. 7A and 7B are graphs illustrating a result of an Experiment 2 where touch inputs were provided to the touch screen panel apparatus according to the second embodiment of the present invention. FIG. 7A illustrates a graph according to an example, wherein coordinate values are obtained by diagonally touching a conventional touch screen panel apparatus. FIG. 7B illustrates a graph according to another example, wherein coordinate values are obtained by diagonally touching the touch screen panel apparatus according to the second embodiment of the present invention. In the graphs, the X-axis represents X-coordinate values calculated by touches and the Y-axis represents Y-coordinate values calculated by touches. The comparison example of FIG. 7A shows a stepped form due to low linearity provided by the conventional touch screen apparatus, while Experiment 2 of FIG. 7B shows a relatively high linearity by comparison.

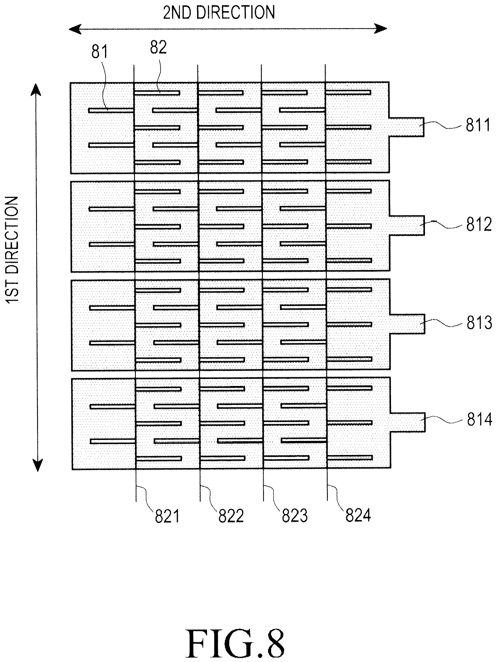

FIG. 8 is a diagram illustrating a touch screen panel apparatus according to a third embodiment of the present invention.

Referring to FIG. 8, the touch screen panel apparatus according to the third embodiment of the present invention includes first electrode plates 811, 812, 813, and 814 formed in a first electrode layer, second electrode lines 821, 822, 823, and 824 formed in a second electrode layer, and a second electrode plate 81 and a third electrode plate 82 connected to the second electrode lines 821, 822, 823, and 824.

The first electrode plates 811, 812, 813, and 814 are arranged in a first direction, (e.g., a longitudinal direction) and are regularly spaced apart from each other by a predetermined distance. Each of the first electrode plates 811, 812, 813, and 814 may be a rectangular plate in which the length thereof in the first direction is greater than the length thereof in the second direction. Preferably, the length of each electrode plate in the first direction is large enough to accommodate at least one second electrode plate 81 and at least one third electrode plate 82, that is, is larger than the a height between the second electrode plate 81 and the third electrode plate 82.

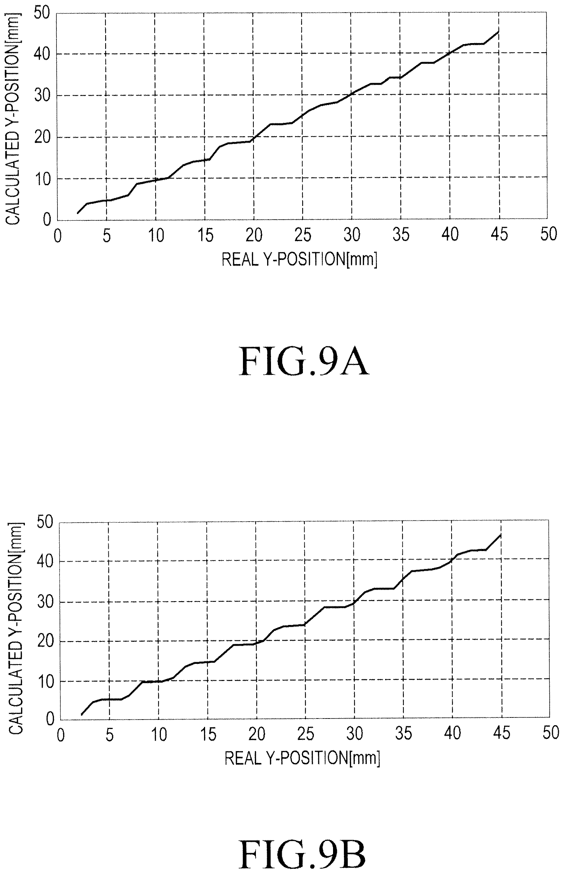

FIGs. 9A AND 9b are diagrams illustrating a result of an Experiment 3 where touch inputs were provided to the touch screen panel apparatus according to the third embodiment of the present invention. FIG. 9A is a graph depicting measurements according to an example, wherein coordinate values are obtained by diagonally touching a conventional touch screen panel apparatus. FIG. 9B is a graph depicting measurements according to another example, wherein coordinate values are obtained by diagonally touching the touch screen panel apparatus according to the third embodiment of the present invention. In the graphs of FIGs. 9A and 9B, the X-axis represents X-coordinate values calculated by touches and the Y-axis represents Y-coordinate values calculated by touches. The example of FIG. 9A shows a stepped form due to its low linearity, and, by contrast the example of Experiment 3 in FIG. 9B shows a relatively high linearity.

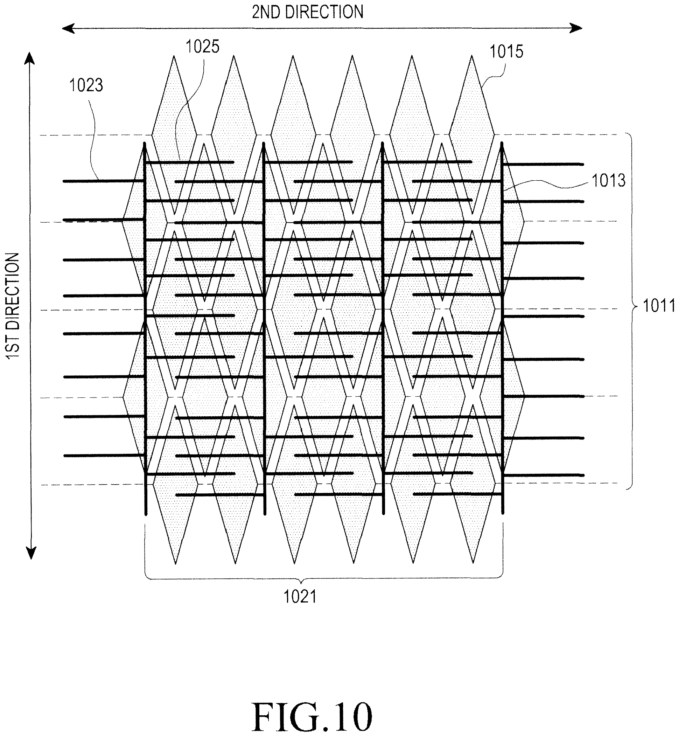

FIG. 10 is a diagram illustrating a touch screen panel apparatus according to a fourth embodiment of the present invention.

Referring to FIG. 10, the touch screen panel apparatus according to the fourth embodiment of the present invention includes a first electrode line 1011 (represented by dashed lines) and first electrode plates 1013 and 1015 formed in a first electrode layer, a second electrode line 1021 (represented by solid lines), a second electrode plate 1023 and a third electrode plate 1025 formed in a second electrode layer. The second electrode plate 1023 and the third electrode plate 1025 are connected to the second electrode line 1021.

The arrangements and structures of the first electrode line 1011 and the first electrode plates 1013 and 1015 are the same as those of the first electrode lines 411, 412, 413, 414, and 415 and the first electrode plate 41, 42, 43, 44, 45, 46, and 47 of the touch screen panel apparatus according to the first embodiment of the present invention. Thus, the first electrode lines 411, 412, 413, 414, and 415 and the first electrode plate 41, 42, 43, 44, 45, 46, and 47 of the touch screen panel apparatus according to the first embodiment of the present invention can be referred to for details of the first electrode line 1011 and the first electrode plates 1013 and 1015 of the fourth embodiment of the present invention.

The arrangements and structures of the second electrode line 1021, the second electrode plate 1023, and the third electrode plate 1025 are the same as those of the second electrode lines 821, 822, 823, and 824, the second electrode plate 81, and the third electrode plate 82 of the touch screen panel apparatus according to the third embodiment of the present invention. [As described above, the arrangements and structures of the second electrode line 1021, the second electrode plate 1023, and the third electrode plate 1025 are the same as those of the second electrode lines 821, 822, 823, and 824, the second electrode plate 81, and the third electrode plate 82. As you mentioned, in Fig. 8, the second electrode lines 821, 822, 823, and 824 are straight lines, and in Fig. 10, the second electrode line 1021 is branched design. In this regard, however, the second electrode lines 821, 822, 823, and 824 of Fig. 8 and the second electrode line 1021 of Fig. 10 are the same structures. In this regard, since the above description already discloses "The arrangements and structures of the second electrode line 1021, the second electrode plate 1023, and the third electrode plate 1025 are the same as those of the second electrode lines 821, 822, 823, and 824, the second electrode plate 81, and the third electrode plate 82 of the touch screen panel apparatus according to the third embodiment of the present invention", we think that revising the Figures are not necessary. Thus, the second electrode lines 821, 822, 823, and 824, the second electrode plate 81, and the third electrode plate 82 of the touch screen panel apparatus according to the third embodiment of the present invention can be referred to for details of the second electrode line 1021, the second electrode plate 1023, and the third electrode plate 1025, respectively, of the touch screen panel apparatus according to the fourth embodiment of the present invention.

Moreover, the quantity and intervals of the first electrode line 1011, the first electrode plates 1013 and 1015, the second electrode line 1021, the second electrode plate 1023, and the third electrode plate 1025 can be variously modified by those skilled in the art, in accordance with embodiments of the present invention.

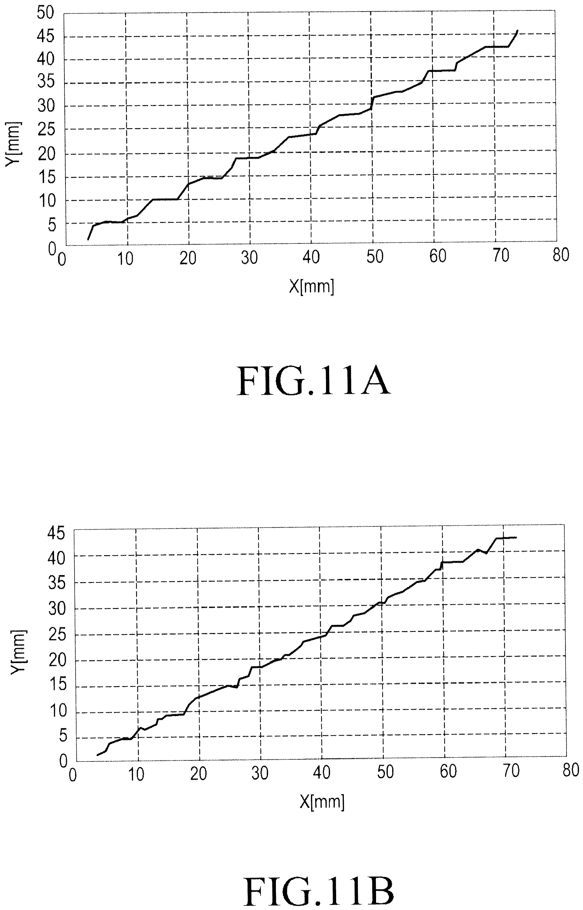

FIGs. 11A and 11B are graphs illustrating a result of an Experiment 4, where touch inputs were provided the touch screen panel apparatus according to the fourth embodiment of the present invention. FIG. 11A is a graph illustrating measurements according to an example, wherein coordinate values obtained by diagonally touching a conventional touch screen panel apparatus. FIG. 11B is a graph illustrating measurementsaccording to another example, wherein coordinate values obtained by diagonally touching the touch screen panel apparatus according to the fourth embodiment of the present invention. In the graphs, the X-axis represents X-coordinate values calculated by touches and the Y-axis represents Y-coordinate values calculated by touches. The example of FIG. 11A shows a stepped form due to low linearity, and, by contrast FIG. 11B shows a relatively high linearity when using a touch screen according to the fourth embodiment of the present invention.

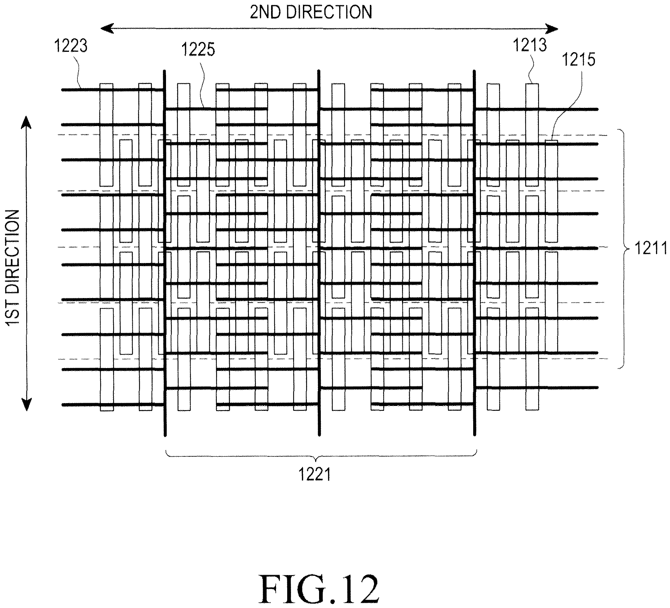

FIG. 12 is a diagram illustrating a touch screen panel apparatus according to the fifth embodiment of the present invention.

Referring to FIG. 12, the touch screen panel apparatus according to the fifth embodiment of the present invention includes a first electrode line 1211 and first electrode plates 1213 and 1215 formed in a first electrode layer, and a second electrode line 1221 formed in a second electrode layer, a second electrode plate 1223, and a third electrode plate 1225.

The arrangements and structures of the first electrode line 1211 and the first electrode plates 1213 and 1215 are the same as those of the first electrode lines 611, 612, 613, 614, and 615 and the first electrode plates 61, 62, 63, 64, and 65 of the touch screen panel apparatus according to the second embodiment of the present invention. Thus, the first electrode lines 611, 612, 613, 614, and 615 and the first electrode plates 61, 62, 63, 64, and 65 of the touch screen panel apparatus according to the second embodiment of the present invention can be referred to for details of the first electrode line 1211 and the first electrode plates 1213 and 1215 of the touch screen panel apparatus according to the fifth embodiment of the present invention.

The arrangements and structures of the second electrode line 1221, the second electrode plate 1223, and the third electrode plate 1225 are the same as those of the second electrode lines 821, 822, 823, and 824, the second electrode plate 81, and the third electrode plate 82 of the touch screen panel apparatus according to the third embodiment of the present invention. Thus, the second electrode lines 821, 822, 823, and 824, the second electrode plate 81, and the third electrode plate 82 of the touch screen panel apparatus according to the third embodiment of the present invention can be referred to for details of the second electrode line 1221, the second electrode plate 1223, and the third electrode plate 1225 of the touch screen panel apparatus according to the fifth embodiment of the present invention.

Moreover, the quantity, intervals, lengths, areas of first electrode lines and first electrode plates formed in a first electrode layer and the quantity, intervals, lengths, areas of second electrode lines, second electrode plates, and third electrode plates formed in a second electrode layer may be variously modified by those skilled in the art.

According to embodiment of the present invention, in a touch screen, a touched region can be accurately detected without increasing the number of channels. In addition, a region touched by a user can be accurately detected even if a touch screen panel is touched through an input medium having a contact area smaller than a distance between channels.

While the invention has been shown and described with reference to certain embodiments thereof, it will be understood by those skilled in the art that various changes in form and details may be made therein without departing from the spirit and scope of the invention as defined by the appended claims.

## Claims

1. A touch screen panel apparatus comprising a first electrode layer, where the first electrode layer comprises:
a plurality of first electrode lines arranged in a first direction such that adjacent first electrode lines are separated from each other by a predetermined distance;
a plurality of first odd-numbered electrode plates coupled to odd-numbered lines of the first electrode lines; and
a plurality of first even-numbered electrode plates coupled to even-numbered lines of the first electrode lines,
wherein the plurality of first odd-numbered electrode plates and the plurality of first even-numbered electrode plates are alternately arranged in a second direction different from the first direction.

2. The touch screen panel apparatus as claimed in claim 1, further comprising:
a second electrode layer provided above or below the first electrode layer, the second electrode layer including a plurality of second electrode lines arranged in the second direction, such that adjacent second electrode lines are separated from each other by a predetermined distance.

3. The touch screen panel apparatus as claimed in claim 1, wherein a length of the plurality of first odd-numbered electrode plates and a length of the plurality of first even-numbered electrode plates in the first direction are greater than the distance between adjacent first electrode lines.

4. The touch screen panel apparatus as claimed in claim 3, wherein the length of the plurality of first odd-numbered electrode plates and the length of the plurality of first even-numbered electrode plates in the first direction are less than twice the distance between adjacent first electrode lines.

5. The touch screen panel apparatus as claimed in claim 1, wherein the plurality of first odd-numbered electrode plates and the first even-numbered electrode plates have a quadrangular shape in which a width thereof in the first direction is larger than a width thereof in the second direction.

6. The touch screen panel apparatus as claimed in claim 1 or 5, wherein the plurality of first odd-numbered electrode plates and the plurality of first even-numbered electrode plates have a rectangular shape.

7. The touch screen panel apparatus as claimed in claim 1 or 5, wherein the plurality of first odd-numbered electrode plates and the plurality of first even-numbered electrode plates have a diamond shape.

8. The touch screen panel apparatus as claimed in claim 1 or 2, wherein the second electrode layer includes:
a plurality of second electrode plates arranged along one side of respective first electrode lines by a predetermined interval to be connected each other; and
a plurality of third electrode plates arranged along another side of respective first electrode lines opposite the side to which the second electrode plates are arranged and separated by a predetermined interval to be connected each other, and
wherein the plurality of second electrode plates and the plurality of third electrode plates are alternately arranged in the first direction.

9. The touch screen panel apparatus as claimed in claim 8, wherein a length of the plurality of second electrode plates and a length of the plurality of third electrode plates in the second direction are less than the distance between adjacent first electrode lines.

10. A touch screen panel apparatus comprising:
a plurality of first electrode layers arranged in a first direction such that adjacent first electrode lines are separated from each other by a first distance; and
a second electrode layer including:
a plurality of second electrode lines alternately arranged in a second direction different from the first direction, such that adjacent second electrode lines are separated by a second distance,
a plurality of second electrode plates arranged such that adjacent second electrode lines are separated by a third distance along one side of respective second electrode lines, and
a plurality of third electrode plates arranged such that adjacent third electrode plates are separated by the third distance, along a side of respective the second electrode lines opposite to the side to which the second electrode plates are arranged, the plurality of second electrode plates and the plurality of third electrode plates being alternately
arranged in the first direction,
wherein each of the first electrode layers includes a first electrode plate crossing the second electrode line perpendicular to the second electrode line and having a width large enough to accommodate at least one second electrode plate and at least one third electrode plate._,
